Europäisches Patentamt

European Patent Office

Office européen des brevets

(19)

(11) Publication number: **0 143 650**
**A2**

(12) # EUROPEAN PATENT APPLICATION

(21) Application number: **84308244.7**

(22) Date of filing: **28.11.84**

(51) Int. Cl.⁴: **B 60 R 16/02**

(30) Priority: **30.11.83 GB 8331974**

(71) Applicant: **Lucas Electrical Electronics & Systems Limited, Well Street, Birmingham B19 2XF (GB)**

(43) Date of publication of application: **05.06.85 Bulletin 85/23**

(72) Inventor: **Salway, Peter Hugh, 3 High Meadow Road Kings Norton, Birmingham B38 9 AP (GB)**

(74) Representative: **Evershed, Michael et al, Marks & Clerk Alpha Tower Suffolk Street Queensway, Birmingham B1 1TT (GB)**

(84) Designated Contracting States: **DE FR GB IT NL SE**

(54) **Vehicle multiplex system.**

(57) A vehicle multiplex system comprises a control station (10) and a set of outstations (11 to 18) connected by individual buses (21 to 28) to the control station (10). The control station (10) and outstations (11 to 18) receive signals from local sensors and control local loads. In order to achieve a short response time at a low data transmission rate, each individual bus (21 to 28) includes a pair of data lines. One data line transmits data from the control station (10) to the associated outstation and the other data line transmits data from the outstation to the control station (10). The system is arranged so that the two data lines of each bus transmit data simultaneously. The control station (10) also includes a single bi-directional port for transmitting data over a single bi-directional data line (31) to one or more extension stations.

0143650

- 1 -

## Vehicle Multiplex System

This invention relates to a vehicle multiplex system.

In a known type of vehicle multiplex system, a set of stations are connected together by a common data bus. Although this system provides the advantage that further stations may be added to the common data bus with relative ease, it suffers from a number of disadvantages. Because each station uses the bus in turn and because each data transmission must include address information, it is necessary to transmit data at a high data rate in order to achieve the required response time. Conventional vehicle wiring techniques are not conducive to high data rates. The construction of each station is complicated, as each station must be arranged so that not more than one station occupies the data bus at the same time and so that a faulty station is prevented from continuously occupying the bus. Also, each station must be arranged so that it must respond only to data which is intended for it. A further disadvantage of this system is that external mechanical or electrical damage can cause total system failure.

In another known system, a control station is connected to a set of outstations by a set of individual data buses. Although this system does not suffer from the various disadvantages mentioned with regard to the system having a common data bus, it is desirable to arrange the system so that the shortest possible response time is achieved at the lowest possible data transmission rate.

It is accordingly an object of this invention to provide a new or improved vehicle multiplex system.

According to one aspect of this invention there is provided a vehicle multiplex system comprising a control station, a set of outstations, and an individual bus for connecting each outstation to the control station, each individual bus including a pair of data lines, one of which transmits data from the control station to the outstation and the other of which transmits data from the outstation to the control station, and the system being arranged so that, in use, the two data lines of each bus transmit data simultaneously.

By providing a pair of data lines in each bus and by arranging the system so that the two data lines can transmit data simultaneously, a short response time may be achieved at a low data transmission rate and consequently conventional wiring techniques may be employed.

The control station may transmit data to the outstations in a format in which, during data transmission, the logical state of the line changes at the end of each clock period. By using this format, the clock information is transmitted to each outstation by the control station and so the system may be synchronized without providing accurate clock pulse generators in the various outstations.

As mentioned above, the system in which the control station is connected to a set of outstations by a set of individual buses does not suffer from the various disadvantages mentioned in relation to the system which uses a common data bus. However, as such a system will be arranged to have only a certain maximum number of outstations, the system capability cannot readily be extended.

It is another object of this invention to provide an improved vehicle multiplex system in which the system capability can be readily extended.

According to another aspect of this invention there is provided a vehicle multiplex system comprising a control station, a set of outstations, and an individual data bus for connecting the control station to each outstation, said control station having a single bi-directional port for transmitting data to, and receiving data from, one or more extension stations. When one or more extension stations are provided, the or each extension station is connected to the control station by a single common data line which is connected to the single bi-directional port.

By providing the single directional port, the capability of the system may be readily extended. Although the extension stations will suffer from the various disadvantages mentioned above, these disadvantages will only apply to the extension stations and, moreover, the nature of extension stations is usually such that response time is not critical.

This invention will now be described in more detail, by way of example, with reference to the accompanying drawings, in which:-

Figure 1 shows the general layout of the vehicle multiplex system embodying this invention;
Figure 2 is a block diagram of the control station and two of the outstations forming part of the system shown in Figure 1;
Figure 3 is a detailed circuit diagram of the control station;

Figure 4 is a circuit diagram of one of the
outstations; and
Figures 5, 6 and 7 illustrate the data format used in
the system.

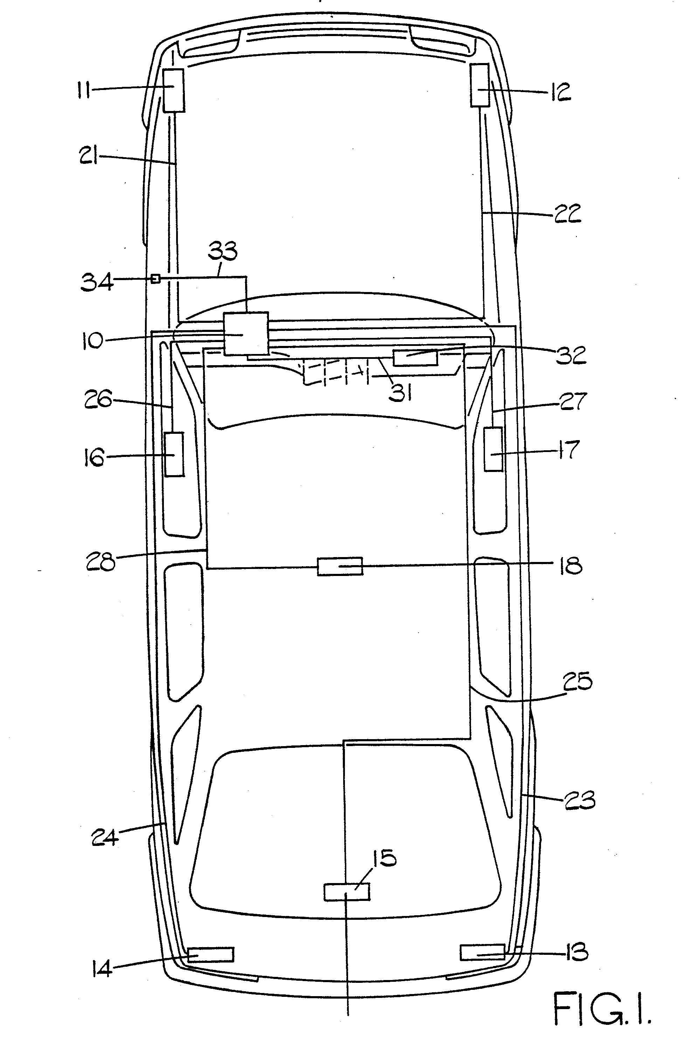

Referring now to Figure 1, the multiplex system is
shown installed in a vehicle. The system includes a
control station 10 and eight outstations 11 to 18 which
are connected to the control station 10 respectively by
eight individual buses 21 to 28. The outstations 11 to
14 are positioned at the four corners of the vehicle
and control the various lights which are situated in
these positions. The outstation 15 is located in the
tail gate and controls components such as a rear window
heater and a rear screen wiper which are located in the
tail gate. The outstations 16 and 17 are located in the
front doors of the vehicle and control components such
as electrically operated windows and mirrors which are
positioned in the doors and may respond to sensors
positioned in the doors such as driver or passenger
operated window control switches. The outstation 18 is
positioned in the centre of the vehicle and may control
components situated nearby such as a courtesy lamp and
may response to sensors such as temperature sensor or
switches operated by the rear seat passengers. The
control station 10 controls components such as
windscreen wipers and the fan motor which are located
nearby and is responsive to sensors such as light
switches and heater controls mounted at the front of
the passenger compartment. The control station 10
transmits data to, and receives data from the
outstations 11 to 18. Thus, the control station 10 may
transmit signals for turning on lamps situated near the
outstations 11 to 14 in response to operation of the
light switches and it may operate the fan motor in
accordance with information from a temperature sensor located near the outstation 18. The control station 10 may also receive data from one outstation and transmit it to another outstation. For example, upon operation of a window switch for the passenger door but located in the driver's door, data will be transmitted from the outstation 17 to the control station 10, and the control station 10 will then transmit the necessary data to the outstation 16 for operating the passenger window. The control station 10 may also act as a system supervisor. For example, in response to an inhibit switch mounted on the dashboard, the control station 10 may prevent operation of the rear windows.

The control station 10 is connected by a bus 31 to an instrument station 32. As will be explained in more detail below, the bus 31 includes a single bi-directional data line and this data line may be used to connect the system to extension stations, this possibility being indicated in Figure 1 by four dashed lines. The control station 10 is further connected by a bus 33 to a connector 34 for connecting the system to off vehicle diagnostic equipment.

Although eight outstations are shown in Figure 1, this is only by way of example and the actual number of outstations and also the layout of the outstations and the central station in a particular vehicle will depend upon the requirements of the vehicle.

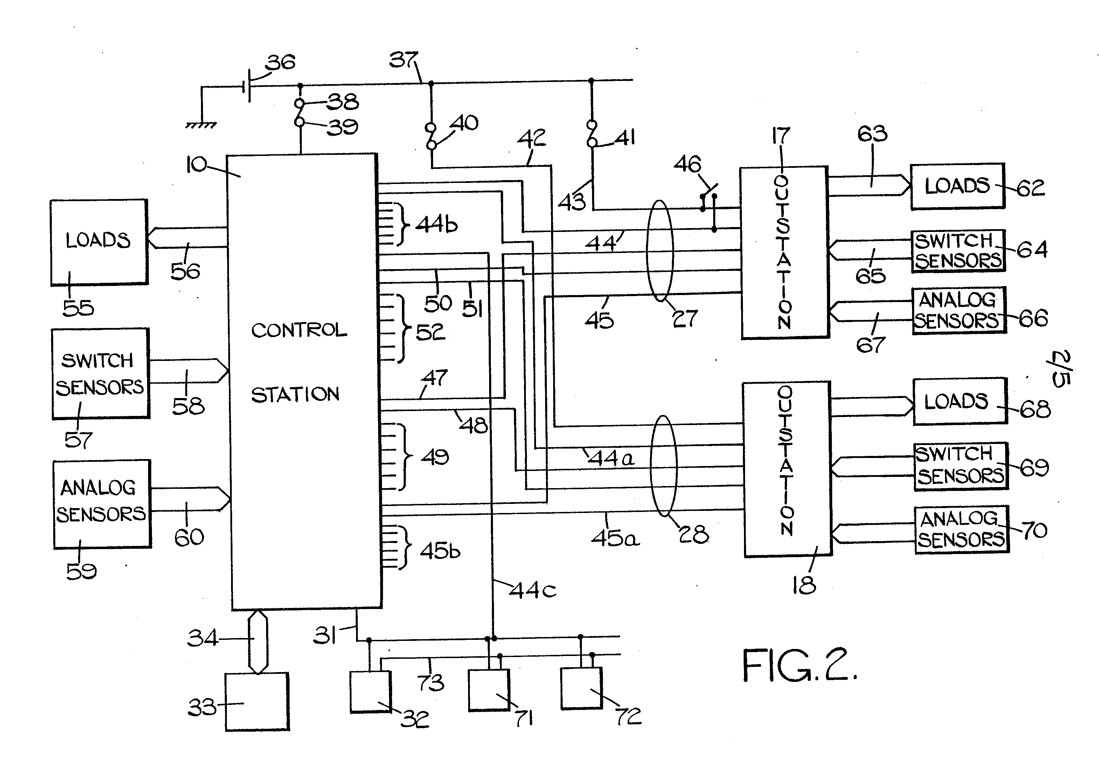

Referring now to Figure 2, there is shown a block diagram for the multiplex system and, for reasons of clarity, outstations 11 to 16 have been omitted. As shown in Figure 2, the negative pole of the vehicle battery 36 is connected to earth and the positive pole is connected to a line 37. The line 37 is connected through a fuse 38 to a line 39 which supplies power to the control station 10, the power from line 39 being used both as a power supply for the logic circuitry of control station 10 and also as a power supply for the loads which are driven directly from this station. Line 37 is connected through a pair of fuses 40 and 41 to a pair of lines 42 and 43 which respectively provide power to outstations 18 and 17. The power supplied on lines 42 and 43 is used to drive the loads which are directly controlled by these two outstations. Further fuses are provided for supplying power to the remaining outstations and all the fuses may conveniently be positioned in a fuse box located beside the control station 10. The control station 10 provides power on a line 44 to the logic circuitry of outstations 17, on a line 44a to the logic circuitry of outstation 18 and on six further lines indicated at 44b to the six remaining outstations. The impedance of each of lines 44, 44a and 44b is such that a short circuit at any point in the line would neither act as a fire hazard nor affect the operation of outstations except for the one which is directly associated with the short circuit. The central station 10 provides a logic ground on a line 45 to the outstation 10, on a line 45a to the outstation 18, and on six further lines indicated at 44b to the six remaining outstations. When the control station 10 supplies power to lines 44, 44a and 44b this causes the outstations to change from a quiescent to an active state. The lines 44, 44a and 44b may be connected to one of the lines which receives power from line 37 at various points by devices operated by the vehicle driver or a passenger, such as a door operated switch, a courtesy lamp switch, or the vehicle ignition switch. The door switch is indicated at 46. If such a connection occurs when the outstations are in a quiescent state, this will result in bringing the outstation into an active state. Because the logic circuitry of the outstations receives power from the line 44, 44a and 44b their logic circuitry can continue to operate even after failure of the associated fuse. In an alternative configuration, the ground lines 45, 45a and 45b may be used to activate the outstations.

The control station 10 transmits data to the outstation 17 via a line 47 and to the outstation 18 via a line 48. Data to the remaining outstations is transmitted on six further lines, the terminals of which are indicated at 49. The control station 10 receives data from outstation 17 on a line 50 and from outstation 18 on a line 51. Six further lines are provided for receiving data from the remaining six outstations, the terminals for these being indicated at 52. As may be observed from Figure 2, the bus 27 comprises lines 43, 44, 47, 50 and 45, and bus 28 comprises lines 42, 44a, 48, 51 and 45a.

The control station 10 drives its associated loads 55 through a bus 56. The loads 55 include components such as the windscreen wipers. The station 10 receives signals from its associated switch sensors 57 through a bus 58 and from its associated analog sensors 59 through a bus 60. The switch sensors 57 include components such as the light switches and the analog sensors 59 may include components such as the heater controls. The outstation 17 drives its associated loads 62 through a bus 63, the loads 62 including components such as the electric windows. The outstation 17 receives signals from its associated switch sensors 64 through a bus 65 and from its associated analog sensors 66 through a bus 67. The switch sensor 64 include the window operation switches. The outstation 18 is associated with loads 68, switch sensors 69 and analog sensors 70. The analog sensors 70 include the temperature sensor mentioned above.

As mentioned above, station 10 is connected to the
instrument station 32 by a bi-directional data line 31.
For purposes of illustration, in Figure 2, the line 31
is shown connected to extension stations 71 and 72. The
stations 32, 71 and 72 receive power for their logic
circuitry from a line 44c. If desired, the stations 32,
71 and 72 may receive power from line 37. A line may
also be provided to supply clock pulses from station 10
to the instrument station 32 and extension station 71
and 72. Such a line eliminates the need to provide
clock pulse generators in the extension stations.

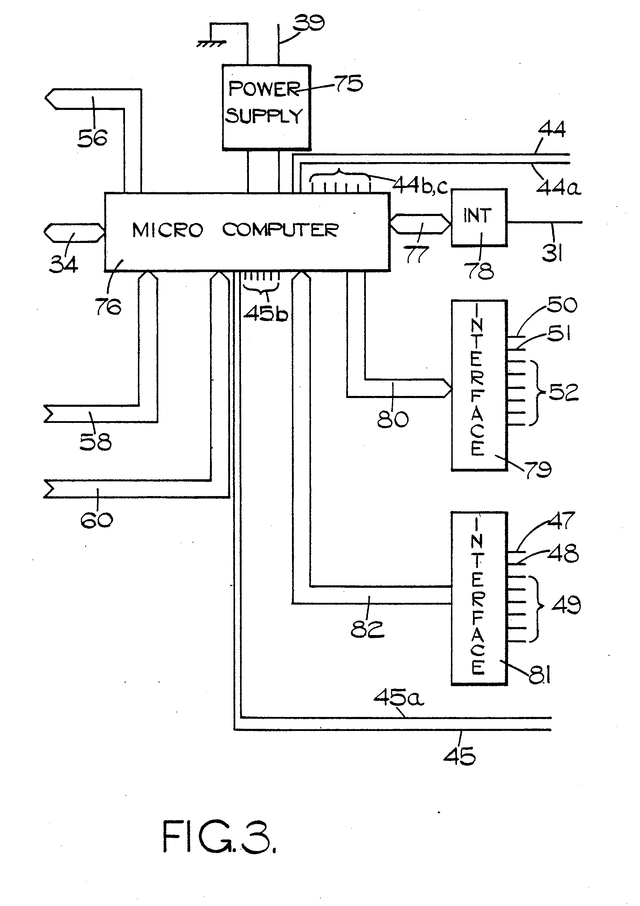

The circuit diagram for the station 10 is shown in more
detail in Figure 3. As there shown, the station 10
includes a power supply circuit 75 which is connected
to earth and receives power from line 39 and supplies
power to a microcomputer 76. The microcomputer has a
set of output ports which are connected to the bus 56
for operating the loads 55. In the case of a power
consuming load, one of the lines forming bus 56 is used
as a control signal for a power switch. The
microcomputer further includes a set of bi-directional
ports which are connected to bus 34, and two sets of
input ports which are connected respectively to buses
58 and 60. In order to convert the analog input signals
into digital form, the microcomputer is of the type
which incorporates an analog-to-digital converter. The
microcomputer 76 also has output ports for supplying
power to the line 44, 44a and 44b and 44c and further
output ports which are connected to the logic ground
lines 45, 45a and 45b. The microcomputer also includes
a set of bi-directional ports which are connected via a
bus 77 to an interface 78 which is connected to the
bi-directional line 31. Thus, interface 78 provides a
bi-directional output port for the station 10. Lastly,
the microcomputer is connected to an interface circuit 79 by a bus 80 and to a further interface circuit 81 by a bus 82. The interface circuit 79 is connected to the lines which transmit data to the outstations and the interface circuit 81 is connected to the lines for receiving data from these stations.

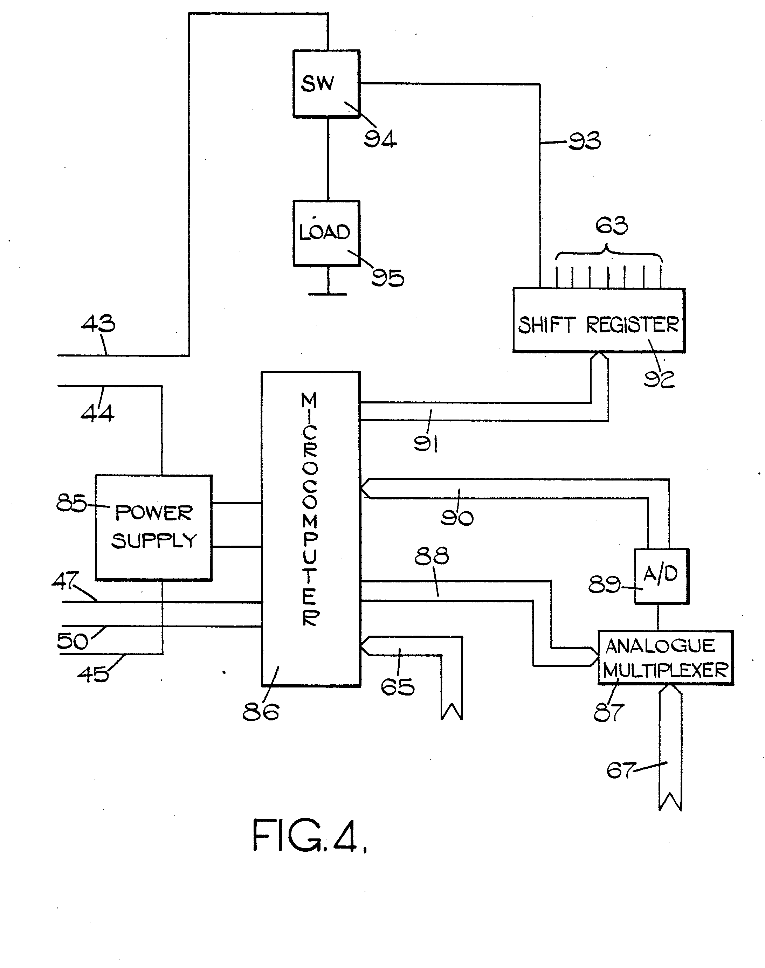

Each outstation has a generally similar circuit and, by way of example, the circuit diagram for outstation 17 is shown in Figure 4. As there shown, outstation 17 includes a power supply circuit 85 which receives power from lines 44 and 45 and supplies power to a four-bit microcomputer 86. Microcomputer 86 has an input port which receives data on line 47 and an output port for transmitting data on line 50. The microcomputer further includes a set of input ports connected to the bus 65 for receiving data from the switch sensors 64. The data from the analog sensor 66 is connected by bus 67 to an analog multiplexer 87 which receives control signals from the microcomputer via a bus 88. The output of multiplexer 87 is supplied to an analog-to-digital converter 89, the output of which is supplied to a set of input ports by a bus 90. The microcomputer supplies data for controlling the load 62 on a bus 91 to a shift register 92. The shift register 92 has a set of terminals which provide the signals for controlling the loads and which together form the bus 63. By way of illustration, in Figure 4, one of these terminals is shown connected to a line 93 which provides a control signal to a switch 94. The switch 94 is connected to the power supply line 43 and supplies power to a load indicated at 95. An example of a load protection arrangement which can be used with the shift register 92 is described in our application of even date entitled "Outstation Arrangement for a Vehicle Electrical System".

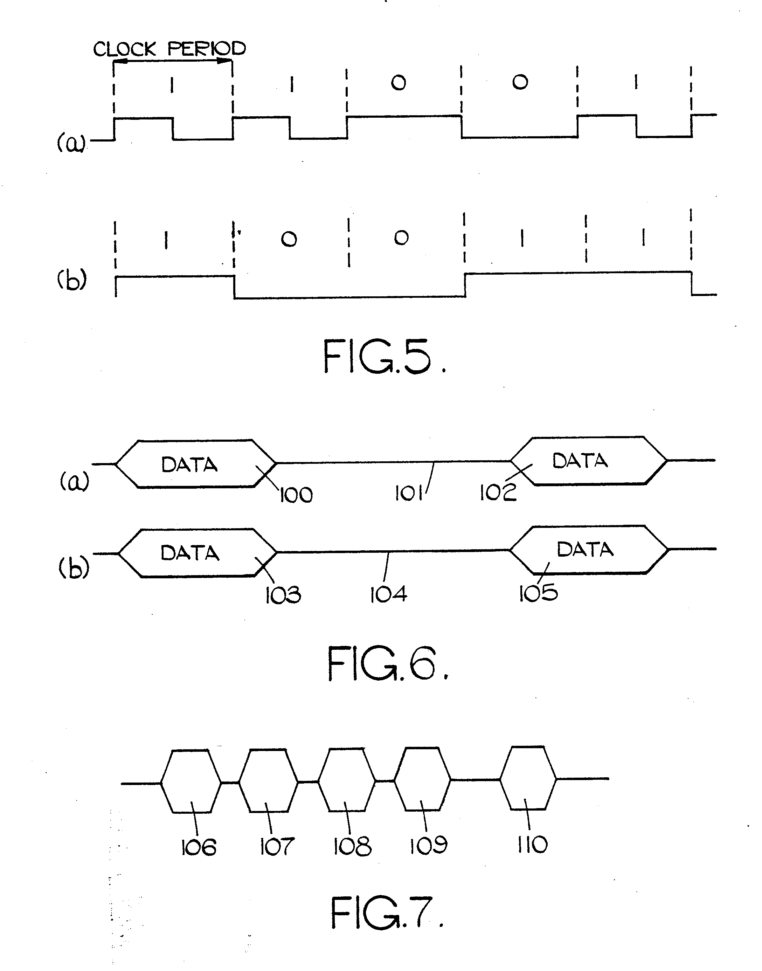

The data format used by the control station 10 for transmitting data to the outstations is shown in Figure
5a and the format used by the outstations for
transmitting data to the station 10 is shown in Figure
5b. As shown in Figure 5a, the data format used by the
station 10 is such that the state of the line changes
at the end of each clock period and, where a binary
"one" is being transmitted, a further change occurs at
an intermediate position in the clock period. Thus, the
entire system is sychronised by the signal transmitted
by the station 10 and there is no need to provide clock
pulse generators in the individual outstations. As
shown in Figure 5b, the outstations use a format in
which the actual state of the line during the clock
period defines the binary signal which is being
transmitted. The high state shown in Figure 5a and 5b
is represented by a current level thereby permitting
the lines to be terminated by low impedances and
thereby providing a high degree of immunity from radio
frequency interference. Also, in order to prevent radio
frequency interference, the rising and falling edges of
each pulse may be slowed.

The actual pattern of data transmission for the station
10 is shown in Figure 6a, and the pattern for one of
the outstations is shown in Figure 6b. As shown in
Figure 6a, the station 10 transmits a set of data to
form a message 100, the message 100 being followed by a
pause 101 which in turn is followed by a further
message 102. The outstation transmits a message 103
simultaneously with message 100, message 103 being
followed by pause 104 which coincides with pause 101
and which is followed by a further message 105 which
coincides with message 102. Because the outstations
transmit data simultaneously with station 10, they can
use the clock pulse information transmitted by station
10 and simultaneous transmission of data also enables data to be transmitted at low rates thereby permitting the use of conventional wiring techniques.

The instrument station and the expansion stations transmit messages on a rota basis as indicated at 106 to 110 in Figure 7. These messages are transmitted in the pauses between the messages transmitted by station 10. The instrument station and expansion stations can additonally transmit messages between themselves, but not to the control station, at any time. The instrument station and the expansion stations use the format shown in Figure 5a and the end of each message is denoted by no transmission at the intermediate position during the following clock period. The termination is thus detected by the other stations which can easily be arranged so that each station will transmit in turn. Because the single data bus is used, each message must include address information. If one of the stations does not transmit, the remaining stations can easily detect the resulting pause and the next station in turn can then be made to transmit. If desired, the control station can identify data transmitted by the outstations which is identified for the instrument station or one of the expansion stations and make this data available on the bus 31.

Although conventional wiring is used in the system which has been described above, the simple point to point nature of the data lines provides the opportunity for replacing the conventional wiring with optical fibres and the term "line" as used in this specification should be interpreted as covering both conventional wiring and such fibres.

CLAIMS:

1.      A vehicle multiplex system comprising a control station (10), a set of outstations (11 to 18), and an individual bus (21 to 28) for connecting each outstation (11 to 18) to the control station (10), characterised in that each individual bus (21 to 28) includes a pair of data lines (47,50;48,51;49,52), one of which transmits data from the control station (10) to the outstation and the other of which transmits data from the outstation to the control station, and the system being arranged so that, in use, the two data lines of each bus transmit data simultaneously.

2.      A vehicle multiplex system as claimed in claim 1, characterised in that the control station (10) is arranged to transmit data to the outstations in a format in which, during data transmission, the logical state of the line changes at the end of the clock period.

3.      A vehicle multiplex system as claimed in claim 2, characterised in that each outstation is arranged to transmit data to the control station (10) in a format in which, during each clock period, the logical state of the line defines the signal which is being transmitted.

4.      A vehicle multiplex system as claimed in any one of the preceding claims characterised in that the system further includes a single bi-directional port (78) for transmitting data to, and receiving data from, one or more extension stations (32, 71, 72)

5.    A vehicle multiplex system as claimed in any one of the preceding claims characterised in that the system includes a set of first power supply lines (44, 44a, 44b) each of which transmits power from the control station (10) to the logic circuitry of an associated outstation (11 to 18), and at least one second power supply line (41,42) providing power for loads controlled by an associated outstation (11 to 18).

6.    A vehicle multiplex system as claimed in any one of the preceding claims, characterised in that the system includes at least one device (46) operated by a vehicle driver or a vehicle passenger for connecting one of said first power supply lines (44, 44a, 44b) to an associated second power supply line (41,42).

7.    A vehicle multiplex system comrising a control station (10), a set of outstations (11 to 18), and an individual data bus (21 to 28) for connecting the control station (10) to each outstation (21 to 28), characterised in that the control station (10) has a single bi-directional port (78) for transmitting data to, and receiving data from, one or more extension stations (32, 71,72).

0143650

1/5

FIG.1.

FIG.2.

2/5

0143650

FIG.3.

FIG.4.

CLOCK PERIOD

(a)

(b)

## FIG.5.

(a) DATA 100 101 102 DATA

(b) DATA 103 104 105 DATA

## FIG.6.

106 107 108 109 110

## FIG.7.